# EUROPÄISCHE PATENTSCHRIFT

(11) **EP 0 827 472 B1**
(45) Veröffentlichungstag und Bekanntmachung des Hinweises auf die Patenterteilung: **27.01.1999**
(21) Anmeldenummer: 96917384.8
(22) Anmeldetag: 18.05.1996
(51) Int. Cl.: B62D 5/04

(54) **HILFSKRAFTLENKUNG FÜR KRAFTFAHRZEUGE**
MOTOR VEHICLE SERVO-ASSISTED STEERING SYSTEM
DIRECTION ASSISTEE POUR VEHICULES A MOTEUR

(30) Priorität: 22.05.1995 DE 19518196
(43) Veröffentlichungstag der Anmeldung: 11.03.1998
(73) Patentinhaber: ZF FRIEDRICHSHAFEN Aktiengesellschaft, 88038 Friedrichshafen (DE)
(72) Erfinder: BUDAKER, Martin, D-73540 Heubach (DE); BÜHLMAIER, Fritz, Peter, D-73547 Lorch (DE); HÄGELE, Gerhard, D-73453 Hohenstadt (DE); NAGEL, Willi, D-73527 Schwäbisch Gmünd (DE)
(86) Internationale Anmeldenummer: EP9602148
(87) Internationale Veröffentlichungsnummer: WO9637399

(56) Entgegenhaltungen:
- DE-A- 4 202 116
- DE-C- 18 932
- US-A- 4 650 019
- PATENT ABSTRACTS OF JAPAN vol. 014, no. 262 (M-0981), 6.Juni 1990 & JP,A,02 074467 (KOYO SEIKO CO LTD), 14.März 1990,

## Beschreibung

Die Erfindung betrifft eine Hilfskraftlenkung für Kraftfahrzeuge, die ein Lenkgetriebe mit einer Eingangswelle und einen Servomotor mit einer rotierenden Abtriebswelle enthält. Die Abtriebswelle des Servomotors ist über ein als Schneckengetriebe ausgebildetes Untersetzungsgetriebe und über je eine Kupplung für jede Lenkrichtung mit der Eingangswelle des Lenkgetriebes verbindbar. Dazu enthält das Schneckengetriebe zwei koaxial zueinander angeordnete Schneckenräder. Jedes Schneckenrad steht über eine Schnecke in ständiger trieblicher Verbindung mit der Abtriebswelle des Servomotors. Jedes Schneckenrad ist außerdem mit je einer Kupplungshälfte der beiden Kupplungen drehfest verbunden.

Eine derartige Hilfskraftlenkung ist bekannt aus der DE 42 02 116 A1. Bei diesem Lenkgetriebe werden die beiden koaxial zueinander angeordneten Schneckenräder jeweils von einer Schnecke angetrieben. Dabei handelt es sich um zylindrische Schnecken, deren Achsen parallel zueinander liegen. Die beiden Schnecken sind über eine Stirnradstufe mechanisch miteinander gekoppelt. Nur eine der beiden Schnecken wird direkt von dem Servomotor angetrieben, während der Antrieb der zweiten Schnecke über die Stirnradstufe erfolgt. Solange sich die Abtriebswelle des Servomotors dreht, werden die beiden Schnecken, die beiden Schneckenräder und jeweils eine Kupplungshälfte der beiden Kupplungen angetrieben.

In der Stirnradstufe entstehen unerwünschte Abwälzgeräusche der Stirnzahnräder. Außerdem sind für die Herstellung der beiden Stirnräder, der beiden Schnecken und der zugehörigen Wälzlager ein relativ großer Fertigungsaufwand und damit verbundene hohe Herstellkosten erforderlich.

Der Erfindung liegt die Aufgabe zugrunde, die Nachteile der bekannten Hilfskraftlenkung zu vermeiden. Insbesondere sollen die Herstellkosten verringert werden. Gleichzeitig sollen die Geräusche reduziert werden.

Diese Aufgabe wird durch die im Anspruch 1 gekennzeichnete Hilfskraftlenkung gelöst. Dazu werden die beiden Schnecken koaxial auf einer gemeinsamen Welle angeordnet. Dadurch kann die Stirnradstufe entfallen. Die Kosten für die Herstellung der Stirnradstufe können ebenso wie die Kosten für eine getrennte Lagerung der zwei Schnecken eingespart werden. Mit dem Wegfall der Stirnradstufe wird auch die darin liegende Geräuschquelle beseitigt.

Weitere vorteilhafte und zweckmäßige Ausgestaltungen der Erfindung sind in den Unteransprüchen angegeben.

Besonders einfach wird die Aufgabe dadurch gelöst, daß die gemeinsame Welle, auf der die beiden Schnecken koaxial angeordnet sind, mit der Abtriebswelle des Servomotors fluchtet. Die gemeinsame Welle ist mit der Abtriebswelle für wenigstens eine Drehrichtung drehfest verbunden. Dies wird beispielsweise durch einen zwischen den beiden Wellen liegenden Freilauf erreicht. Der Servomotor ist zweckmäßigerweise ein Elektromotor.

Da die beiden Schnecken in der gleichen Drehrichtung angetrieben werden, die beiden Schneckenräder jedoch in unterschiedlichen Drehrichtungen drehen müssen, muß die Verzahnung der Schnecken und der Schneckenräder entsprechend ausgebildet sein. Dazu ist es erforderlich, daß die Verzahnungen der beiden Schnecken zueinander entgegengesetzte Steigungen aufweisen.

Um zu ermöglichen, daß die beiden koaxial angeordneten Schnecken in die beiden koaxial angeordneten Schneckenräder eingreifen, wird der Achsenwinkel des Schneckengetriebes, d. h. der Winkel zwischen den in eine Ebene projizierten Achsen der Schnecken und der Schneckenräder, derart gewählt, daß er von 90° abweicht.

Die Verzahnung der Schnecken wird als Globoid-Verzahnung ausgebildet, die einen konkaven Hüllquerschnitt aufweist. Es ist jedoch auch möglich, zylindrische Schnecken mit einer Beveloid-Verzahnung zu verwenden.

Im folgenden wird die Erfindung anhand eines in der Zeichnung dargestellten Ausführungsbeispieles näher erläutert. Es zeigen:
- Fig. 1: einen Längsschnitt durch die erfindungsgemäße Hilfskraftlenkung und
- Fig. 2: einen Querschnitt nach der Linie II-II in Fig. 1.

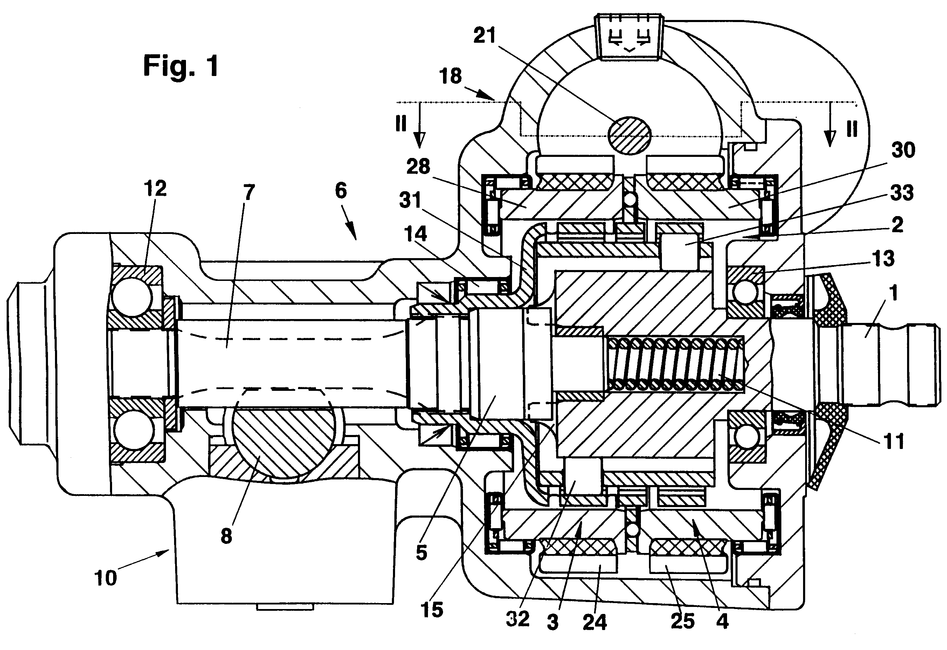

In Fig. 1 steht eine mit einem nicht dargestellten Lenkhandrad verbundene Lenkspindel 1 über eine Kupplungseinrichtung 2 mit zwei Kupplungen 3 und 4 mit einer Eingangswelle 5 in Verbindung. Die Eingangswelle 5 ist Teil eines Lenkgetriebes 6, im vorliegenden Falle eines aus einem Ritzel 7, einer Zahnstange 8 und einer Andrückvorrichtung 10 bestehenden Zahnstangen-Lenkgetriebes. Zwischen der Lenkspindel 1 und der Eingangswelle 5 sitzt zum axialen Spielausgleich eine Feder 11. Die Axialkräfte auf die Lenkspindel 1 und auf die mit dem Ritzel 7 verbundene Eingangswelle 5 lassen sich in Wälzlagern 12 und 13 aufnehmen, die zugleich die Lenkspindel 1 bzw. das Ritzel 7 radial abstützen. Ein Radialwälzlager 14 stützt zusätzlich die Eingangswelle 5 und die auf der Eingangswelle 5 gelagerte Lenkspindel 1 ab. An einem verdickten Teil der Lenkspindel 1 sind Ausnehmungen 15 angeordnet, die mit einem gewissen Verdrehspiel in Mitnehmer der Eingangswelle 5 eingreifen. Dadurch entsteht eine Totgangkupplung zwischen der Lenkspindel 1 und der Eingangswelle 5.

Ein als Elektromotor ausgebildeter Servomotor 16 weist eine rotierende Abtriebswelle 17 auf, die über ein Untersetzungsgetriebe in der Form eines Schneckengetriebes 18 und für jede Lenkrichtung über je eine der beiden Kupplungen 3 und 4 mit der Eingangswelle 5 des Lenkgetriebes 6 verbindbar ist. Anstelle des Elektromotors kann der Servomotor 16 durch einen Hydromotor oder direkt durch den Fahrzeugmotor gebildet sein.

Koaxial zu der Abtriebswelle 17 und mit dieser über einen Freilauf 20 für eine Drehrichtung drehfest verbunden ist eine Welle 21, auf der zwei Schnecken 22 und 23 koaxial zueinander angeordnet sind. Mit jeder Schnecke 22 bzw. 23 steht ein Schneckenrad 24 bzw. 25 in Eingriff, so daß die beiden Schneckenräder 24 und 25 in ständiger trieblicher Verbindung mit der Abtriebswelle 17 des Servomotors 16 stehen. Die beiden Schneckenräder 24 und 25 sind koaxial zueinander und konzentrisch zu der Lenkspindel 1 angeordnet.

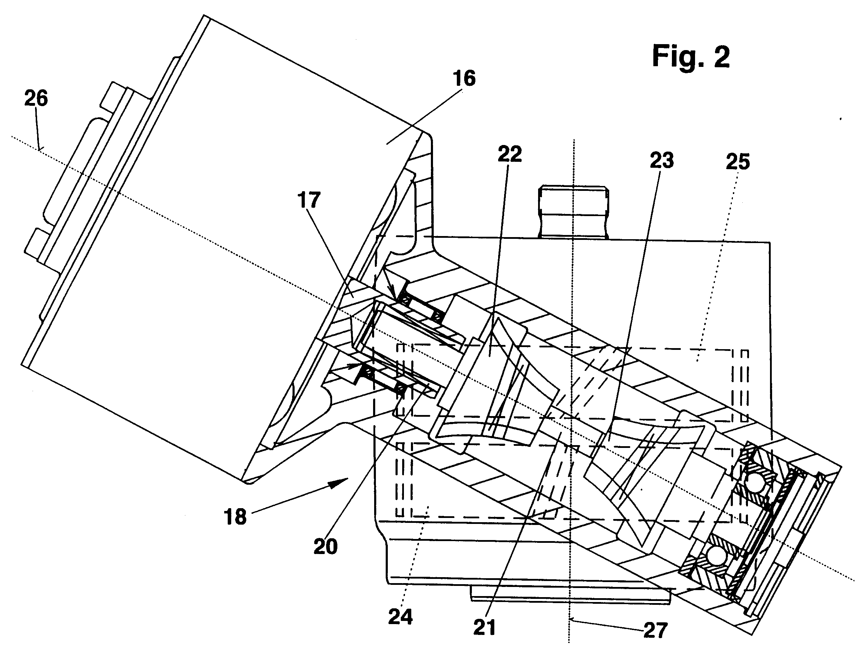

Wie aus Fig. 2 zu ersehen ist, schneiden die in eine Ebene projizierten Achsen 26 und 27 der Schnecken 22 und 23 bzw. der Schneckenräder 24 und 25 sich unter einem Winkel, der von 90° abweicht. Dieser Winkel wird als Achsenwinkel des Schneckengetriebes 18 bezeichnet. Die Verzahnung der Schnecken 22 und 23 und der Schnekenräder 24 und 25 ist derart ausgebildet, daß die Schneckenräder 24 und 25 von dem Servomotor 16 in entgegengesetzten Drehrichtungen angetrieben werden. Die Verzahnungen der beiden Schnecken 22 und 23 weisen deshalb zueinander entgegengerichtete Steigungen auf.

Um einen schwingungs- sowie geräuschdämpfenden Lauf zu erreichen, werden die Verzahnungen wenigstens der Schneken 22 und 23, bei Bedarf jedoch auch die der Schneckenräder 24 und 25, als Globoid-Verzahnung ausgeführt. Dadurch erhält die Verzahnung der Schnecken 22 und 23 einen konkaven Hüllquerschnitt, wie er in Fig. 2 zu sehen ist.

Anstelle der Globoid-Verzahnung können die Schneken 22 und 23 auch mit einer Beveloid-Verzahnung ausgeführt sein. Die Schnecken haben dann eine zylindrische Außenform.

Für die Anordnung der beiden Schnecken 22 und 23 auf der gemeinsamen Welle 21 gibt es verschiedene Möglichkeiten, deren Anwendung beispielsweise von der Wahl des Herstellungsverfahrens abhängig ist. Werden die Schnecken beispielsweise in einem spanlosen Herstellungsverfahren gefertigt, so ist es möglich, eine oder beide Schnecken mit der gemeinsamen Welle 21 einteilig auszubilden. Werden die Schnecken dagegen spanabhebend hergestellt, so können beide oder auch nur eine der beiden Schnecken getrennt von der gemeinsamen Welle 21 gefertigt werden. In diesem Fall müssen die beiden oder nur die eine der beiden Schnecken nach ihrer Herstellung mit der Welle 21 fest verbunden werden.

Die genaue Ausgestaltung der Kupplungseinrichtung 2 ist nicht Gegenstand der Anmeldung. Zum Verständnis ist hier nur notwendig zu wissen, daß jede Kupplung 3 und 4 eine Kupplungsnabe 28 bzw. 30 enthält. Die Kupplungsnabe 28 ist mit dem Schneckenrad 24, die Kupplungsnabe 30 ist mit dem Schneckenrad 25 drehfest verbunden. Die beiden Kupplungsnaben 28 und 30 wirken mit einer Klemmhülse 31 zusammen, die mit der Eingangswelle 5 des Lenkgetriebes 6 drehfest verbunden ist. Je nach Drehrichtung der Lenkspindel 1 wird die Klemmhülse 31 durch rollenförmige Klemmkörper 32 bzw. 33 zur Anlage an einer der Kupplungsnaben 28 bzw. 30 gebracht. Zum genauen Aufbau und zur Wirkung der Kupplungseinrichtung 2 wird auf die DE 42 02 116 A1 verwiesen.

Liegen beim Einbau der Hilfskraftlenkung, beispielsweise in einen Kleinwagen, besonders beengte Raumverhältnisse vor, so läßt sich der Servomotor 16 von der übrigen Baueinheit (Schneckengetriebe 18, Kupplungseinrichtung 2, Lenkgetriebe 6) trennen. Der Servomotor 16 läßt sich zum Beispiel unterhalb der Windschutzscheibe an der Spritzwand oder an einem Radhaus befestigen. Die Verbindung mit dem Schneckengetriebe 18 kann dann durch eine Gelenkwelle oder eine biegsame Welle hergestellt werden.

Es liegt im Rahmen der Erfindung, eine aus dem Schnekengetriebe 18 und der Kupplungseinrichtung 2 bestehende Baueinheit unmittelbar unterhalb des Lenkhandrades einzubauen und die Verbindung zu dem Lenkgetriebe 6 über eine verlängerte Eingangswelle 5 herzustellen.

Im folgenden wird die Funktion der Hilfskraftlenkung beschrieben: Leitet der Fahrer an dem nicht dargestellten Lenkhandrad ein Drehmoment in die Lenkspindel 1 ein, so drücken - je nach Drehrichtung - die Klemmkörper 32 oder 33 den entsprechenden Teil der Klemmhülse 31 gegen eine der Kupplungsnaben 28 bzw. 30. Dadurch wird die Hilfskraft des Servomotors 16 über das Schneckengetriebe 18 auf die Eingangswelle 5 des Lenkgetriebes 6 übertragen. Übt der Fahrer keine Lenkkraft mehr aus, dann rollen die Klemmkörper 32 bzw. 33 in ihre Mittelstellung zurück, so daß die Kupplungsverbindung zwischen der Klemmhülse 31 und einer der Kupplungsnaben 28 bzw. 30 gelöst wird.

Falls der Servomotor 16 aufgrund einer Störung ausfallen sollte, läßt sich dieser mit Hilfe des Freilaufes 20 vom Lenkungsstrang entkoppeln. Der Fahrer muß dann den Servomotor bei einer Lenkbewegung nicht mit erhöhtem Kraftaufwand mitdrehen. Das gesamte Drehmoment wird nach Überwinden des Verdrehspieles der Totgangkupplung von der Lenkspindel 1 auf die Antriebswelle 5 übertragen. Der Freilauf 20 wirkt außerdem als Sicherheitselement, wenn beispielsweise der Servomotor aufgrund einer Störung in die falsche Richtung drehen würde.

### Bezugszeichen

- 1: Lenkspindel
- 2: Kupplungseinrichtung
- 3: Kupplung
- 4: Kupplung
- 5: Eingangswelle
- 6: Lenkgetriebe
- 7: Ritzel
- 8: Zahnstange
- 9: -
- 10: Andrückvorrichtung
- 11: Feder
- 12: Wälzlager
- 13: Wälzlager
- 14: Radialwälzlager
- 15: Aussparung
- 16: Servomotor
- 17: Abtriebswelle
- 18: Schneckengetriebe
- 19: -
- 20: Freilauf
- 21: Welle
- 22: Schnecke
- 23: Schnecke
- 24: Schneckenrad
- 25: Schneckenrad
- 26: Achse
- 27: Achse
- 28: Kupplungsnabe
- 29: -
- 30: Kupplungsnabe
- 31: Klemmhülse
- 32: Klemmkörper
- 33: Klemmkörper

## Patentansprüche

1. Hilfskraftlenkung für Kraftfahrzeuge, die ein Lenkgetriebe (6) und einen Servomotor (16) mit einer rotierenden Abtriebswelle (17) enthält und folgende weitere Merkmale aufweist:
- eine Lenkspindel (1) ist über eine Totgangkupplung und für jede Lenkrichtung über je eine Kupplung (3, 4) mit einer Eingangswelle (5) des Lenkgetriebes (6) verbindbar;
- die Abtriebswelle (17) des Servomotors (16) ist über ein als Schneckengetriebe (18) ausgebildetes Untersetzungsgetriebe und für jede Lenkrichtung über je eine der beiden Kupplungen (3, 4) mit der Eingangswelle (5) des Lenkgetriebes (6) verbindbar;
- das Schneckengetriebe (18) enthält zwei koaxial zueinander angeordnete Schneckenräder (24, 25);
- jedes Schneckenrad (24, 25) steht über eine Schneke (22, 23) in ständiger trieblicher Verbindung mit der Abtriebswelle (17) des Servomotors (16);
- jedes Schneckenrad (24, 25) ist mit je einer Kupplungsnabe (28, 30) einer der beiden Kupplungen (3, 4) drehfest verbunden,
dadurch **gekennzeichnet,** daß die beiden Schnecken (22, 23) koaxial auf einer gemeinsamen Welle (21) angeordnet sind.

2. Hilfskraftlenkung nach Anspruch 1, dadurch **gekennzeichnet,** daß die gemeinsame Welle (21) koaxial zu der Abtriebswelle (17) des Servomotors (16) angeordnet und mit dieser für wenigstens eine Drehrichtung drehfest verbunden ist.

3. Hilfskraftlenkung nach Anspruch 2, dadurch **gekennzeichnet,** daß der Achsenwinkel des Schneckengetriebes (18), d. h. der Winkel zwischen den in eine Ebene projizierten Achsen (26, 27) der Schnecken (22, 23) und der Schneckenräder (24, 25), von 90° abweicht.

4. Hilfskraftlenkung nach Anspruch 3, dadurch **gekennzeichnet,** daß die Verzahnung der Schneken (22, 23) und der Schneckenräder (24, 25) derart ausgebildet ist, daß die Schneckenräder (24, 25) bei gleicher Drehrichtung der Abtriebswelle (17) in entgegengesetzten Drehrichtungen angetrieben werden.

5. Hilfskraftlenkung nach Anspruch 4, dadurch **gekennzeichnet,** daß die Verzahnungen der beiden Schnecken (22, 23) zueinander entgegengerichtete Steigungen aufweisen.

6. Hilfskraftlenkung nach Anspruch 4, dadurch **gekennzeichnet,** daß die Verzahnung wenigstens der Schnecken (22, 23) eine Globoid-Verzahnung ist.

7. Hilfskraftlenkung nach Anspruch 6, dadurch **gekennzeichnet,** daß die Verzahnung der Schneken (22, 23) einen konkaven Hüllquerschnitt aufweist.

8. Hilfskraftlenkung nach Anspruch 4, dadurch **gekennzeichnet,** daß die Verzahnung wenigstens der Schnecken (22, 23) eine Beveloid-Verzahnung ist.

9. Hilfskraftlenkung nach Anspruch 1, dadurch **gekennzeichnet,** daß wenigstens eine der beiden Schnecken (22, 23) mit der gemeinsamen Welle (21) einteilig ausgebildet ist.

10. Hilfskraftlenkung nach Anspruch 9, dadurch **gekennzeichnet,** daß wenigstens eine der beiden Schnecken (22, 23) zusammen mit der gemeinsamen Welle (21) spanlos hergestellt ist.

11. Hilfskraftlenkung nach Anspruch 1, dadurch **gekennzeichnet,** daß wenigstens eine der beiden Schnecken (22, 23) nach ihrer Herstellung mit der gemeinsamen Welle (21) fest verbunden wurde.

## Claims

1. Servo-assisted steering system for motor vehicles, comprising a steering gear (6) and a servomotor (16) with a rotating output shaft (17) and showing the following additional features:
- a steering shaft (1) is connectable via a lost-motion coupling to an input shaft (5) of the steering gear (6), and for each steering direction via one coupling (3,4);
- the output shaft (17) of the servomotor (16) is connectable via a reduction gear in the form of a worm gear (18) to the input shaft (5) for each steering direction via one of the two couplings (3,4);
- the worm gear (18) comprises two coaxially arranged worm pinions (24,25); each worm pinion (24,25) is permanently and driveably connected to the output shaft (17) of the servomotor (16) via a worm (22,23);
- each worm pinion (24,25) is connected in a rotationally fixed manner to a coupling hub (28, 30) of the two couplings (3,4);
**characterized** in that the two worms (22,23) are disposed coaxially on a common shaft (21).

2. Servo-assisted steering according to claim 1, **characterized** in that the common shaft (21) is arranged coaxially to the output shaft (17) of the servomotor (16) and is rotationally fixed to it for at least one direction of rotation.

3. Servoassisted steering system according to claim 2, **characterized** in that the shaft angle of the worm gear (18) deviates from 90°, i.e., the angle between the axes (26,27) of the worms (22,23) and the worm pinions (24,25) as projected in one plane.

4. Servoassisted steering system according to claim 3, **characterized** in that the gear design of the worms (22,23) and the worm pinions (23,25) is such that the worm gears (24,25) are driven in opposite direction of rotation, with the output shaft (17) rotating in the same direction of rotation.

5. Servo-assisted steering system according to claim 4, **characterized** in that the gear design of both worms (22,23) is such that the slopes face each other.

6. Servo-assisted steering system according to claim 4, **characterized** in that the gearing of at least the worms (22,23) is of globoidal design.

7. Servo-assisted steering system according to claim 6, **characterized** in that the gearings of the worms (22,23) show a concave envelope-generating cut.

8. Servo-assisted steering system according to claim 4, **characterized** in that the gearing of at least the worms (22,23) is a beveloid gearing.

9. Servo-assisted steering system according to claim 1, **characterized** in that at least one of the two worms (22,23) forms one part with the common shaft (21).

10. Servo-assisted steering system according to claim 9, **characterized** in that at least one of the two worms (22,23) was produced together with the common shaft (21) in a non-cutting process.

11. Servo-assisted steering system according to claim 1, **characterized** in that at least one of the two worms (22,23) was rigidly connected to the common shaft (21) after production.

## Revendications

1. Direction assistée pour véhicules automobiles, comportant un mécanisme de direction (6) et un servomoteur (16) avec un arbre mené rotatif (17), présentant en outre les caractéristiques suivantes :
- un arbre de direction (1) peut être relié, par l'intermédiaire d'un embrayage à point mort et pour chaque direction de marche par l'intermédiaire d'un embrayage (3, 4), à un arbre d'entrée (5) du mécanisme de direction (6) ;
- l'arbre mené (17) du servomoteur (16) peut être relié, par l'intermédiaire d'un démultiplicateur conçu comme engrenage à vis sans fin (18), et pour chaque direction de marche par l'intermédiaire d'un des deux embrayages (3, 4), à l'arbre d'entrée (5) du mécanisme de direction (6) ;
- l'engrenage à vis sans fin (18) comporte deux roues tangentes (24, 25) disposées de façon coaxiale l'une par rapport à l'autre ;
- chaque roue tangente (24, 25), par l'intermédiaire d'une vis sans fin (22, 23), est en engrenage constant avec l'arbre mené (17) du servomoteur (16) ;
- chaque roue tangente (24, 25) est reliée sans pouvoir tourner avec chaque fois un moyeu d'embrayage (28, 30) d'un des deux embrayages (3,4),
**caractérisée** en ce que les deux vis sans fin (22, 23) sont disposées de façon coaxiale sur un arbre commun (21).

2. Direction assistée selon la revendication 1, **caractérisée** en ce que l'arbre commun (21) est disposé de façon coaxiale par rapport à l'arbre mené (17) du servomoteur (16) et est relié à celui-ci sans pourvoir tourner dans au moins un sens de rotation.

3. Direction assistée selon la revendication 2, **caractérisée** en ce que l'angle des axes de l'engrenage à vis sans fin (18), c'est-à-dire l'angle entre les axes des vis sans fin (22, 23) et les roues tangentes (24, 25), projetés dans un plan, diffère de 90°.

4. Direction assistée selon la revendication 3, **caractérisée** en ce que la denture des vis sans fin (22, 23) et des roues tangentes (24, 25) est conçue de telle manière que les roues tangentes (24, 25) à sens de rotation identique de l'arbre mené (17) sont entraînées dans le sens de rotation opposé.

5. Direction assistée selon la revendication 4, **caractérisée** en ce que les dentures des deux vis sans fin (22, 23) présentent des pas opposés l'un par rapport à l'autre.

6. Direction assistée selon la revendication 4, **caractérisée** en ce qu'au moins la denture des vis sans fin (22, 23) est une denture globique.

7. Direction assistée selon la revendication 6, **caractérisée** en ce que la denture des vis sans fin (22, 23) présente un profil enveloppant concave.

8. Direction assistée selon la revendication 4, **caractérisée** en ce qu'au moins la denture des vis sans fin (22, 23) est une denture bévéloïde.

9. Direction assistée selon la revendication 1, **caractérisée** en ce qu'au moins une des deux vis sans fin (22, 23) est conçue en une seule partie avec l'arbre commun (21).

10. Direction assistée selon la revendication 9, **caractérisée** en ce qu'au moins une des deux vis sans fin (22, 23) est fabriquée par formage avec l'arbre commun (21).

11. Direction assistée selon la revendication 1, **caractérisée** en ce qu'au moins une des deux vis sans fin (22, 23), après sa fabrication, est reliée fermement avec l'arbre commun (21).
